# EUROPÄISCHE PATENTANMELDUNG

(11) **EP 3 009 757 A1**
(43) Veröffentlichungstag der Anmeldung: **20.04.2016**
(21) Anmeldenummer: 14188886.7
(22) Anmeldetag: 14.10.2014
(51) Int. Cl.: F24F 5/00, F24F 11/06, F25D 3/00, F25D 16/00

(54) **Verfahren zum Betrieb eines Kühlsystems und Kühlsystem**

(71) Anmelder: Grundfos Holding A/S, 8850 Bjerringbro (DK)
(72) Erfinder: Hillerup Lyhne, Casper, 8850 Bjerringbro (DK)
(74) Vertreter: Patentanwälte Vollmann & Hemmer

(57) **Zusammenfassung**

Die Erfindung betrifft ein Verfahren zum Betrieb eines Kühlsystems, welches zumindest ein Kühlaggregat (2), zumindest einen Kältespeicher (10) sowie zumindest einen zu kühlenden Verbraucher (4) aufweist, durch welche ein Kühlmedium zirkuliert, wobei in zumindest einem ersten Betriebszustand das Kühlaggregat (2) und der Kältespeicher (10) in einer Parallelschaltung mit dem Verbraucher (4) verbunden sind und in zumindest einem zweiten Betriebszustand das Kühlaggregat (2) und der Kältespeicher (10) in einer Serienschaltung miteinander verbunden sind, sowie ein Kühlsystem, in welchem dieses Verfahren zur Anwendung kommt.

## Beschreibung

Die Erfindung betrifft ein Verfahren zum Betrieb eines Kühlsystems sowie ein Kühlsystem, in welchem ein solches Verfahren zur Anwendung kommt.

Insbesondere zur Klimatisation von Gebäuden sind Kühlsysteme bekannt, welche zumindest ein Kühlaggregat aufweisen, das ein Kühlmedium kühlt, welches durch Leitungen im Gebäude zirkuliert. Weiterhin ist es bekannt, Kälte- bzw. Eisspeicher als Energiespeicher in solchen Systemen einzusetzen. So kann beispielsweise bei günstigen Strompreisen ein solcher Kältespeicher gekühlt werden und später kann Wärme aus dem zu klimatisierenden Gebäude in der Weise abgeführt werden, dass der Kältespeicher mit dieser abgeführten Wärme erwärmt wird, d. h. die Kälte wird dem Kältespeicher wieder entnommen.

Problematisch bei diesen Systemen ist die Optimierung des Betriebs, um einerseits den Kältespeicher optimal kühlen zu können und andererseits eine maximale Kühlleistung zur Kühlung eines Objektes oder Gebäudes bereitstellen zu können.

Im Hinblick auf diese Problematik ist es Aufgabe der Erfindung, ein verbessertes Verfahren zum Betrieb eines Kühlsystems mit einem Kältespeicher bereitzustellen sowie ein entsprechendes Kühlsystem mit einem Kältespeicher bereitzustellen, welche einerseits eine optimierte Kühlung des Kältespeichers und andererseits eine optimierte Kühlleistung zur Kühlung eines Gebäudes oder eines Objektes ermöglichen.

Diese Aufgabe wird durch ein Verfahren mit den in Anspruch 1 angegebenen Merkmalen sowie durch ein Kühlsystem mit den in Anspruch 6 angegebenen Merkmalen gelöst. Bevorzugte Ausführungsformen ergeben sich aus den Unteransprüchen, der nachfolgenden Beschreibung sowie den beigefügten Figuren.

Das erfindungsgemäße Verfahren dient zum Betrieb eines Kühlsystems, wobei das Kühlsystem zumindest ein Kühlaggregat und zumindest einen Kältespeicher aufweist. Kühlaggregat und Kältespeicher sind mit zumindest einem zu kühlenden Verbraucher über entsprechende Leitungen verbunden, durch welche ein Kühlmedium zirkuliert. Bei dem Kühlmedium kann es sich um ein beliebiges in der Klimatechnik übliches Kühlmedium, beispielsweise um Glycol handeln. Bei dem zumindest einen Kältespeicher handelt es sich bevorzugt um einen Eistank, d. h. um ein isoliertes mit Wasser gefülltes Behältnis. Durch das Behältnis fließt durch geeignete Leitungen, insbesondere in Form von Kühlschlangen, das Kühlmedium und kann so in einem ersten Betriebszustand dem Kältespeicher Wärme entziehen, um ihn zu kühlen. Im Falle eines Eisspeichers wird dabei das Wasser im Inneren eines Behälters gefroren. In einem zweiten Betriebszustand, in welchem der Kältespeicher zur Kühlung eingesetzt wird, wird dem Kältespeicher über das Kühlmedium wieder Wärme zugeführt, d. h. das Kühlmedium wird im Kältespeicher abgekühlt, wobei sich der Kältespeicher erwärmt, im Falle eines Eisspeichers das Wasser wieder aufgetaut wird. So gibt der Kältespeicher die gespeicherte Kälte wieder ab.

Bei dem zu kühlenden Verbraucher kann es sich beispielsweise um ein Gebäude oder einen Gebäudeteil handeln. Es können jedoch auch andere zu kühlende Verbraucher oder Objekte, beispielsweise Maschinen oder Ähnliches gemäß dem erfindungsgemäßen Verfahren gekühlt werden. Bei der Kühlanlage handelt es sich bevorzugt um ein bekanntes Kühlaggregat, wie es beispielsweise in Klimaanlagen Verwendung findet und welches geeignet ist, beispielsweise durch Verdichtung und Entspannung das Kühlmedium zu kühlen.

Gemäß dem erfindungsgemäßen Verfahren gibt es zumindest zwei Betriebszustände zum Betrieb des beschriebenen Kühlsystems. In diesen zwei Betriebszuständen werden die einzelnen Anlageteile unterschiedlich miteinander verschaltet, d. h. das zumindest eine Kühlaggregat, der zumindest eine Kältespeicher und der zu kühlende Verbraucher sind in einem ersten Betriebszustand anders miteinander verschaltet als in einem zweiten Betriebszustand. So ist vorgesehen, dass in dem ersten Betriebszustand das Kühlaggregat und der Kältespeicher in einer Parallelschaltung mit dem Verbraucher verbunden sind. D. h. die Strömungswege durch den Kältespeicher, das Kühlaggregat und den zumindest einen Verbraucher verlaufen parallel zueinander. In dem zweiten Betriebszustand hingegen sind das Kühlaggregat und der zumindest eine Kältespeicher in einer Reihen- bzw. Serienschaltung miteinander verbunden. D. h. in diesem zweiten Betriebszustand verläuft der Strömungsweg nacheinander durch Kühlaggregat, Kältespeicher und gegebenenfalls den Verbraucher, wobei der Kältespeicher in Strömungsrichtung vorzugsweise zwischen dem Kühlaggregat und dem Verbraucher gelegen ist.

Die zwei Betriebszustände ermöglichen es, das Kühlsystem bzw. die Kühlanlagen je nach Anforderung unterschiedlich zu betreiben. So kann das Kühlsystem in seinem Betrieb stets optimal an äußere Bedingungen angepasst werden, um zum einen eine optimierte Kühlung des zumindest einen Kältespeichers und zum anderen auch eine optimierte Kühlung des zumindest einen Verbrauchers zu ermöglichen.

Bevorzugt sind in dem zweiten Betriebszustand nicht nur das Kühlaggregat und der Kältespeicher in einer Serienschaltung miteinander verbunden, sondern das Kühlaggregat, der Kältespeicher und der zumindest eine Verbraucher in einer Reihen- bzw. Serienschaltung miteinander verbunden. D. h. das Kühlmedium strömt im Kreislauf nacheinander durch das Kühlaggregat, den Kältespeicher und den Verbraucher.

Besonders bevorzugt wird in einem ersten Betriebszustand der Kältespeicher zur Kühlung des zumindest einen Verbrauchers genutzt. D. h. wenn der Verbraucher gekühlt werden soll und dem Kältespeicher Kälte entnommen werden soll, d. h. Wärme aus dem Verbraucher in den Kältespeicher abgeleitet werden soll, werden der Kältespeicher und das Kühlaggregat vorzugsweise parallel zueinander geschaltet bzw. parallel zueinander mit dem Verbraucher verbunden. So können der Kältespeicher und, sofern dessen Kühlleistung nicht ausreichen sollte, der Kältespeicher und das Kühlaggregat gemeinsam zur Kühlung des Verbrauchers eingesetzt werden. Bevorzugt kann in dieser Anordnung problemlos auch der Kältespeicher allein zur Kühlung des Verbrauchers eingesetzt werden, wenn die Kühlleistung des Kältespeichers ausreicht. In diesem Zustand kann das Kühlaggregat abgeschaltet werden. Diese Parallelschaltung von Kühlaggregat und Kältespeicher hat den Vorteil, dass in dieser Schaltungsanordnung der Kältespeicher seine maximale Kühlleistung zur Verfügung stellen kann, da die Temperaturdifferenz zwischen Ein- und Ausgang des Kältespeichers maximiert werden kann. D. h. dem Kältespeicher wird eingangsseitig vorzugsweise das Kühlmedium aus dem Rücklauf des Verbrauchers mit der Ausgangstemperatur des Verbrauchers zugeführt. Soll die Kühlleistung des Kältespeichers durch das Kühlaggregat unterstützt werden, erfolgt eine Teilströmung parallel zu der Strömung des Kühlmediums durch den Kältespeicher und dann durch das Kühlaggregat. Gegebenenfalls ist es auch denkbar, den Strömungsweg durch den Kältespeicher abzuschalten und die Kühlung allein durch das Kühlaggregat zu bewerkstelligen. Dies kann beispielsweise dann erforderlich sein, wenn der Kältespeicher soweit erwärmt ist, dass er zur Kühlung nicht weiter genutzt werden kann.

Der zweite Betriebszustand wird vorzugsweise dazu verwendet, den Kältespeicher durch das Kühlaggregat zu kühlen. D. h. über das Kühlmedium wird dem Kältespeicher Wärme entzogen und von dem Kühlaggregat z. B. in die Umgebung abgeführt. Wenn der Kältespeicher ein Eisspeicher ist, wird so vorzugsweise Wasser in dem Kältespeicher gefroren. Ein Kühlen des Kältespeichers kann besonders bevorzugt dann erfolgen, wenn die hierzu benötigte Energie preisgünstig ist. Im Falle eines elektrisch betriebenen Kühlaggregates ist dies vorzugsweise ein Zeitpunkt, zu dem günstig Strom zur Verfügung steht. Dies kann in modernen mit regenerativen Energien gespeisten Stromnetzen beispielsweise dann sein, wenn Windkraftwerke oder Solarkraftwerke einen besonders großen Ertrag liefern. Idealerweise kann in einem Smart-grid das Kühlsystem automatisch so gesteuert werden, dass bei einem bestimmten Energieangebot oder Energiepreis die Kühlung des Kältespeichers gestartet wird. So kann die Kälte dann erzeugt bzw. die Wärme abgeführt werden, wenn die Energie preisgünstig ist, unabhängig davon, ob der Verbraucher gerade diese Kühlleistung benötigt. Der Verbraucher wiederum kann dann gekühlt werden, wenn er die Kühlleistung tatsächlich benötigt, da die gespeicherte Kälte dann aus dem Kältespeicher wieder zur Verfügung gestellt werden kann, bzw. die Wärme aus dem Verbraucher zu dem Kältespeicher abgeführt werden kann.

Die Anordnung von Kältespeicher und Kühlaggregat in einer Reihen- bzw. Serienschaltung zur Kühlung des Kältespeichers hat den Vorteil, dass bei dieser Verschaltung dem Kältespeicher die maximale Kühlleistung des Kühlaggregates zugeführt werden kann. Bei einer Parallelschaltung von Verbraucher und Kältespeicher würde das von dem Kühlaggregat gekühlte Kühlmedium zunächst durch den Verbraucher und dann durch den Kältespeicher fließen müssen, was den Nachteil hätte, dass das Kühlmedium zunächst im Verbraucher erwärmt würde und somit nicht mehr die maximale Kühlleistung zur Kühlung des Kältespeichers zur Verfügung stünde. In der Reihen- bzw. Serienschaltung kann jedoch sichergestellt werden, dass das von dem Kühlaggregat gekühlte Kühlmedium mit seiner Minimaltemperatur direkt, d. h. ohne Umweg über den zumindest einen Verbraucher, dem Kältespeicher zugeführt wird, um diesen abzukühlen. So werden der Wirkungsgrad und die Kühlleistung verbessert. Besonders bevorzugt werden in dem zweiten Betriebszustand das Kühlaggregat, der Kältespeicher und der Verbraucher derart miteinander verbunden, dass der Kältespeicher stromabwärts des Kühlaggregates und stromaufwärts des Verbrauchers gelegen ist. D. h. der Kältespeicher ist direkt stromabwärts des Kühlaggregates gelegen, sodass das Kühlmedium mit seiner Minimaltemperatur vom Ausgang des Kühlaggregates direkt in den Eingang des zumindest einen Kältespeichers und erst nach Durchströmen des Kältespeichers gegebenenfalls durch den Verbraucher strömt. Bei der Kühlung des Kältespeichers kann bei entsprechender Ausgestaltung der Verbraucher gegebenenfalls abgeschaltet werden und das Kühlmedium kann ausgangsseitig des Kältespeichers am Verbraucher vorbei dem Kühlaggregat wieder zugeführt werden. Dazu kann gegebenenfalls ein Bypass parallel zu dem zumindest einen Verbraucher vorgesehen sein.

Das Umschalten zwischen den beschriebenen zwei Betriebszuständen kann durch geeignete Ventile in dem Kühlsystem erfolgen, welche den Strömungsweg zwischen Kühlaggregat, Kältespeicher und Verbraucher in der gewünschten Weise ändern, sodass in einem ersten Betriebszustand die genannten Teile des Kühlsystems parallel geschaltet sind, während sie in einem zweiten Betriebszustand in Reihe geschaltet sind. Diese Ventile können beispielsweise magnetisch oder elektromotorisch betriebene Ventile sein, welche von einer Steuereinrichtung betätigt werden.

Neben dem vorangehend beschriebenen Verfahren zum Betrieb eines Kühlsystemes ist Gegenstand der Erfindung darüber hinaus ein solches Kühlsystem, in welchem das beschriebene Verfahren zur Anwendung kommt. Dieses erfindungsgemäße Kühlsystem weist zumindest ein Kühlaggregat, zumindest einen Kältespeicher und zumindest einen Verbraucher auf. Diese Elemente sind über Leitungen miteinander verbunden, durch welche ein Kühlmedium zirkuliert, um Wärme von dem Verbraucher zu dem Kältespeicher und/oder dem Kühlaggregat abzuführen. Das Kühlaggregat dient der Kühlung des Kühlmediums und führt die Wärme von dem Kühlmedium nach außen, z. B. an die Umgebungsluft ab. Der Kältespeicher kann von dem Kühlaggregat gekühlt werden und kann wiederum selber dazu dienen, den Verbraucher zu kühlen, indem er die von dem Verbraucher abgeführte Wärme aufnimmt. Hinsichtlich möglicher Ausgestaltungen des Kühlaggregates, des Verbrauchers sowie des Kältespeichers wird auf die obige Beschreibung im Zusammenhang mit dem Verfahren beschrieben. In dem erfindungsgemäßen Kühlsystem können die genannten Teile in der gleichen Weise ausgestaltet sein, wie es oben beschrieben wurde.

Das erfindungsgemäße Kühlsystem weist darüber hinaus zumindest eine Umschalteinrichtung auf, welche derart ausgebildet ist, dass durch Umschalten der Umschalteinrichtung der Kältespeicher wahlweise in einer Parallelschaltung oder in einer Serienschaltung mit dem Kühlaggregat verbindbar ist. Die Umschalteinrichtung weist somit zumindest zwei Schaltstellungen auf, wobei eine erste Schaltstellung den ersten Betriebszustand und die zweite Schaltstellung den zweiten Betriebszustand realisiert, wie sie vorangehend anhand des Verfahrens beschrieben wurden. Hinsichtlich der genauen Ausgestaltung der Serienschaltung und der Parallelschaltung sowie der sich daraus ergebenden Vorteile wird auf die obige Beschreibung im Zusammenhang mit dem Verfahren verwiesen.

Die Umschalteinrichtung kann vorzugsweise von einem Umschaltventil oder von mehreren Ventilen gebildet sein, welche von einer Steuereinrichtung betätigt werden. Die Ventile sind weiter bevorzugt elektrisch, d. h. beispielsweise elektromotorisch oder magnetisch betätigt. Die Umschalteinrichtung ist vorzugsweise am Eingang bzw. in einer Eingangsleitung zu dem Kältespeicher angeordnet. Bei dieser Anordnung kann der Kältespeicher mit seinem Eingang, wie beschrieben, wahlweise mit dem Ausgang des Kühlaggregates oder dem Ausgang des Verbrauchers in Verbindung gebracht werden. Alternativ ist es jedoch auch möglich, die Umschalteinrichtung an der Ausgangsseite des Kältespeichers anzuordnen.

Besonders bevorzugt ist in einer Verbindung zu dem zumindest einem Kältespeicher als Umschalteinrichtung ein Umschaltventil angeordnet, welches einen ersten und einen zweiten Strömungsweg aufweist, welche wahlweise mit dem Kältespeicher in Verbindung bringbar sind. Dabei ist zu verstehen, dass als Umschaltventil im Sinne dieses Ausführungsbeispiels auch eine Anordnung von mehreren Ventilen, welche gemeinsam als Umschaltventil wirken, verstanden wird. Das Umschaltventil ist in einer Verbindung zu dem zumindest einen Kältespeicher, d. h vorzugsweise in einer Eingangsleitung oder einer Ausgangsleitung angeordnet. Besonders bevorzugt ist der erste Strömungsweg des genannten Umschaltventils mit einem Ausgang des Kühlaggregates verbunden und bevorzugt der zweite Strömungsweg des Umschaltventils mit einem Ausgang des Verbrauchers verbunden. Wenn das Umschaltventil in seiner ersten Schaltstellung ist, wird für den ersten Betriebszustand, wie er oben beschrieben wurde, eine Parallelschaltung von Kühlaggregat und Kältespeicher zu dem zumindest einen Verbraucher hergestellt. In dieser Schaltstellung ist vorzugsweise der zweite Strömungsweg des Umschaltventils aktiv und mit einem Ausgang des Verbrauchers verbunden. So kann zur Kühlung des Verbrauchers das Kühlmedium direkt von dem Ausgang des Verbrauchers in den Eingang des Kältespeichers geleitet werden. In einer zweiten Schaltstellung der Umschalteinrichtung wird vorzugsweise ein Strömungsweg realisiert, welcher dem zweiten Betriebszustand entspricht, wie er oben beschrieben wurde, d. h. eine Serienschaltung zwischen Kältespeicher und Kühlaggregat hergestellt. In dieser zweiten Schaltstellung ist vorzugsweise der erste Strömungsweg des Umschaltventils aktiv, wie er vorangehend beschrieben wurde und es wird der Ausgang des Kühlaggregates direkt mit einem Eingang des Kältespeichers verbunden, sodass das von dem Kühlaggregat gekühlte Kühlmedium direkt in den Kältespeicher geleitet wird, um diesen zu kühlen.

Gemäß einer weiteren bevorzugten Ausführungsform der Erfindung ist eine Ausgangsleitung des Kältespeichers mit einem Eingang des Verbrauchers verbunden und mündet vorzugsweise in eine Vorlaufleitung, welche den Ausgang des Kühlaggregates mit dem Eingang des Verbrauchers verbindet. So kann das aus dem Kältespeicher austretende Kühlmedium dem Eingang des Verbrauchers zugeleitet werden, um den Verbraucher zu kühlen. Dies ist bevorzugt sowohl bei der Parallelals auch der Serienschaltung, d. h. bevorzugt sowohl im ersten als auch im zweiten Betriebszustand der Fall. So kann das aus dem Kältespeicher austretende Kühlmedium über die Vorlaufleitung zum Eingang des Verbrauchers geleitet werden, wenn der Kältespeicher dazu dient, den Verbraucher zu kühlen. Wenn von dem Kühlaggregat der Kältespeicher gekühlt werden soll, wird das aus dem Kältespeicher austretende Kühlmedium über die Vorlaufleitung und den Verbraucher zurück zum Kühlaggregat geführt, um dort erneut abgekühlt zu werden und dann wieder in dem Eingang des Kältespeichers zugeführt zu werden. Die beiden Betriebszustände unterscheiden sich somit vorzugsweise nur in der Verbindung des Einganges des Kältespeichers. Im ersten Betriebszustand, welcher der Parallelschaltung entspricht, ist der Eingang des Kältespeichers vorzugsweise mit dem Ausgang des Verbrauchers verbunden, während er in dem zweiten Betriebszustand, welcher der Serienschaltung entspricht, mit dem Ausgang des Kühlaggregates verbunden ist. Alternativ ist es jedoch auch möglich, die beiden Betriebszustände durch unterschiedliche Strömungswege, welche sich an den Ausgang des Kältespeichers anschließen, zu realisieren.

Gemäß einer weiteren Ausführungsform der Erfindung mündet die Ausgangsleitung des Kältespeichers an einem Mündungspunkt in die Vorlaufleitung und es ist stromaufwärts des Mündungspunktes in der Vorlaufleitung ein Rückschlagventil angeordnet. Dieses Rückschlagventil verhindert, dass das aus dem Kältespeicher austretende Kühlmedium in der Vorlaufleitung stromaufwärts fließt, d. h. entgegen der vorgesehenen Strömungsrichtung, von dem Kühlaggregat in Richtung zu dem Verbraucher.

Gemäß einer weiteren bevorzugten Ausführungsform der Erfindung ist in einer der das Kühlaggregat mit dem Verbraucher verbindenden Leitungen, vorzugsweise in einer einen Ausgang des Verbrauchers mit einem Eingang des Kühlaggregates verbindenden Rücklaufleitung zumindest eine erste Förderpumpe angeordnet. Diese erste Förderpumpe dient dazu, das Kühlmedium zwischen dem Verbraucher und dem Kühlaggregat zu zirkulieren, d. h. durch den Verbraucher und zurück zum Kühlaggregat zu fördern, in welchem es wieder abgekühlt und dann im Kreislauf wieder dem Verbraucher zugeleitet wird. Diese erste Förderpumpe kann gleichzeitig dazu genutzt werden, das Kühlmedium auch durch den Kältespeicher zu fördern, um diesen zu kühlen und/oder mit Hilfe des Kältespeichers den Verbraucher zu kühlen, indem im Verbraucher erwärmtes Kühlmedium zum Abkühlen durch den Kältespeicher gefördert wird.

Weiter bevorzugt ist in einem Strömungsweg durch den zumindest einen Kältespeicher zumindest eine zweite Förderpumpe und/oder ein Durchflussregulierventil angeordnet. Eine solche zweite Förderpumpe kann dazu dienen, Kühlmedium von dem Kühlaggregat durch den Kältespeicher und zurück zum Kühlaggregat zu zirkulieren, um den Kältespeicher zu kühlen. Ferner kann diese Förderpumpe dazu dienen, Kühlmedium durch den Verbraucher und den Kältespeicher zu zirkulieren, um Wärme von dem Verbraucher in den Kältespeicher abzuführen. Bei der beschriebenen Serien- bzw. Reihenschaltung geschieht dies bevorzugt gleichzeitig, d. h. das Kühlmedium wird durch das Kühlaggregat, den zumindest einen Kältespeicher und den Verbraucher zirkuliert. Die zweite Förderpumpe kann gemeinsam mit der vorangehend beschriebenen ersten Förderpumpe eingesetzt werden. Vorzugsweise ist die zweite Förderpumpe in ihrer Drehzahl regulier- bzw. einstellbar, um den Volumenstrom durch den Kältespeicher verändern zu können. Dies ist insbesondere von Vorteil, um die Kühlleistung des Kältespeichers zur Kühlung des Verbrauchers anpassen zu können. Alternativ oder zusätzlich kann auch der Durchfluss beim Kühlen des Kältespeichers so angepasst bzw. geregelt werden, dass eine optimale Kühlung des Kältespeichers erreicht wird. Der Durchfluss durch den Kältespeicher lässt sich alternativ oder zusätzlich zu der zweiten Förderpumpe auch mit Hilfe eines Durchflussregulierventiles verändern und insbesondere auf einen gewünschten Sollwert regeln. Wenn ein Durchflussregulierventil verwendet wird, kann die Strömung durch den Kältespeicher durch die vorangehend beschriebene erste Förderpumpe erzeugt werden.

Gemäß einer weiteren bevorzugten Ausführungsform der Erfindung ist an dem Verbraucher zumindest eine Mischeinrichtung angeordnet, welche eine Anpassung der Temperatur und/oder des Durchflusses des durch den Verbraucher strömenden Kühlmediums ermöglicht. So ist eine Anpassung der eingebrachten Kühlleistung möglich. Eine solche Mischeinrichtung ermöglicht in bekannter Weise die Mischung zweier Kühlmediumströme mit unterschiedlichen Temperaturen. So kann beispielsweise dem in den Verbraucher einströmenden kalten Kühlmedium wärmeres Kühlmedium aus dem Rücklauf von dem Verbraucher zugemischt werden, um die Vorlauf- bzw. Eingangstemperatur des Kühlmediums an dem Verbraucher zu erhöhen. So ist eine Temperaturanpassung bzw. -regelung für die Temperatur des durch den Verbraucher strömenden Kühlmediums möglich. Die Mischeinrichtung kann ein Mischventil aufweisen, welches wahlweise im Vorlauf oder im Rücklauf zu dem Verbraucher angeordnet sein kann. Die Mischeinrichtung kann eine eigene, d. h. eine autonome Steuereinrichtung zur Temperatureinstellung bzw. -regelung aufweisen. Alternativ kann die Steuerung der Mischeinrichtung in eine zentrale Steuereinrichtung, welche weitere Funktionen übernimmt, integriert sein. Dies kann insbesondere die unten beschriebene Steuereinrichtung, welche die Umschalteinrichtung steuert, sein.

Weiter bevorzugt weist die Mischeinrichtung ein Mischventil auf, über welches die Menge von Kühlmedium, welches dem Eingang des Verbrauchers aus der Vorlaufleitung zugeführt wird, einstellbar ist, wobei das Mischventil vorzugsweise ein vollständiges Verschließen eines Strömungsweges von der Vorlaufleitung zu dem Eingang des Verbrauchers ermöglicht. Das vollständige Verschließen des Strömungsweges ist von Vorteil, um den Verbraucher vollständig von dem Kühlsystem abtrennen zu können, um so beispielsweise den Kältespeicher zu kühlen, ohne gleichzeitig den Verbraucher zu kühlen. Das Mischventil muss nicht zwingend in der Eingangsleitung zu dem Verbraucher gelegen sein, es kann vielmehr auch in einer Mischleitung oder im Rücklauf gelegen sein. Durch entsprechende Regulierung des Rücklaufes oder der Strömung in einer Mischleitung kann indirekt auch die Menge des aus dem Vorlauf dem Verbraucher zugeführten Kühlmediumstromes reguliert werden, wenn in Summe ein Gesamtkühlmediumstrom durch den Verbraucher realisiert werden soll. Gegebenenfalls kann eine zusätzliche Pumpe in dem Mischerkreis angeordnet sein.

Vorzugsweise weist das Kühlsystem darüber hinaus eine Steuereinrichtung auf, welche mit der Umschalteinrichtung zu deren Betätigung verbunden ist und derart ausgestaltet ist, dass die Umschalteinrichtung von der Steuereinrichtung zum Kühlen des Kältespeichers derart betätigt wird, dass der Kältespeicher in einer Serienschaltung mit dem Kühlaggregat verbunden ist. Dies ist der oben anhand des Verfahrens beschriebene zweite Betriebszustand. Die Steuereinrichtung ist ferner bevorzugt so ausgebildet, dass sie die Umschalteinrichtung zum Kühlen des Verbrauchers so betätigt, dass der Kältespeicher mit dem Kühlaggregat in eine Parallelschaltung gebracht wird. Dies ist dann der oben beschriebene erste Betriebszustand.

Für den Fall, dass eine zweite Förderpumpe vorgesehen ist, welche im Kühlmedium-Kreislauf durch den Kältespeicher angeordnet ist und das Kühlmedium durch den Kältespeicher fördert, ist diese Förderpumpe vorzugsweise so ausgebildet, dass sie von der Steuereinrichtung einund ausschaltbar und vorzugsweise in ihrer Drehzahl einstell- insbesondere regelbar ist. So kann durch Ein- und Ausschalten der Förderpumpe die Wärmezu- und -abfuhr zu dem Kältespeicher ein- und ausgeschaltet werden. Durch die Drehzahlvariation kann darüber hinaus der Volumenstrom des Kühlmediums durch den Kältespeicher reguliert werden und so die Wärmemenge, welche in den Kältespeicher eingebracht wird oder aus dem Kältespeicher zu dessen Kühlung abgeführt wird, angepasst werden.

Nachfolgend wird die Erfindung beispielhaft anhand der beigefügten Figuren beschrieben. In diesen zeigt:
- Fig. 1: schematisch ein Kühlsystem gemäß einer ersten Ausführungsform der Erfindung,
- Fig. 2: schematisch ein Kühlsystem gemäß einer zweiten Ausführungsform der Erfindung,
- Fig. 3: schematisch ein Kühlsystem gemäß einer dritten Ausführungsform der Erfindung und
- Fig. 4: schematisch ein Kühlsystem gemäß einer vierten Ausführungsform der Erfindung.

Nachfolgend wird anhand der vier Ausführungsbeispiele für ein Kühlsystem ebenfalls das erfindungsgemäße Verfahren beispielhaft beschrieben.

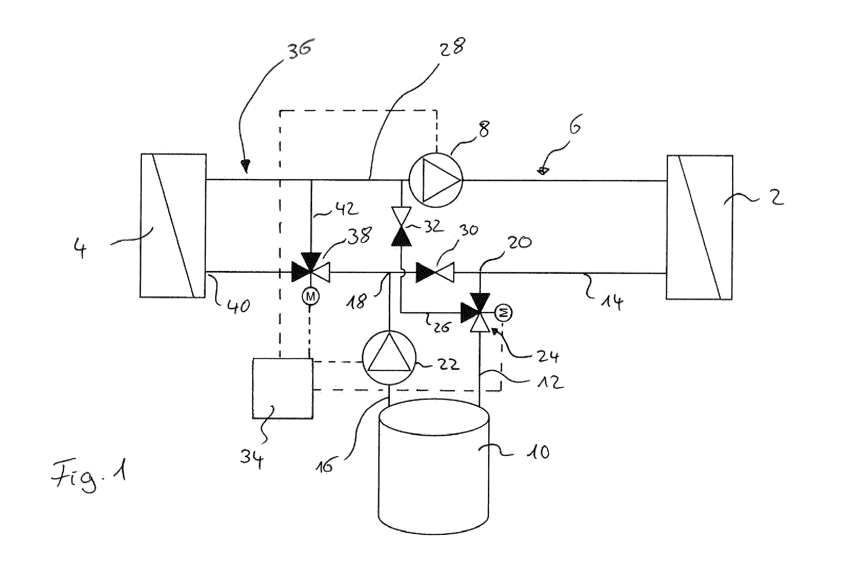

Das in Fig. 1 gezeigte Kühlsystem weist als wesentliche Komponenten ein Kühlaggregat 2 sowie einen Verbraucher 4 auf. Das Kühlaggregat 2 und der Verbraucher 4 sind hier schematisch als Wärmetauscher dargestellt. Das Kühlaggregat 2 kann ein bekanntes Kühlaggregat, beispielsweise mit Kompressor und Wärmetauscher sein. Der Verbraucher 4 kann beispielsweise ein zu kühlendes Gebäude, ein zu kühlender Gebäudeteil oder ein zu kühlendes Objekt, wie beispielsweise eine Maschine sein. Das Kühlaggregat 2 und der Verbraucher 4 sind über Leitungen, welche einen Kühlkreislauf 6 bilden, miteinander verbunden. In dem Kühlkreislauf 6 zirkuliert ein Kühlmedium, wie beispielsweise Glycol. Zur Förderung des Kühlmediums im Kühlkreislauf 6 ist eine erste Förderpumpe in Form eines Umwälzpumpenaggregates 8 vorgesehen. In diesem Beispiel ist das Umwälzpumpenaggregat 8 in einer Rücklaufleitung von dem Verbraucher 4 zu dem Kühlaggregat 2 angeordnet, alternativ könnte es jedoch auch an einer anderen Stelle im Kühlkreislauf 6 angeordnet sein. Bevorzugt ist das Umwälzpumpenaggregat 8 in seiner Drehzahl einstell- bzw. regelbar, sodass der Durchfluss durch den Kühlkreislauf 6 variiert werden kann.

Erfindungsgemäß ist als weitere wesentliche Komponente in dem gezeigten Kühlsystem ein Kältespeicher 10 vorhanden, welcher in diesem Ausführungsbeispiel als Eisspeicher ausgebildet ist. D. h. der Kältespeicher 10 weist einen Behälter auf, welcher mit Wasser gefüllt ist, welches gefroren wird, um Energie in Form von Kälte, d. h. fehlender Wärme zu speichern. Der Kältespeicher 10 weist eine Eingangsleitung 12 auf, welche von einer Vorlaufleitung 14 des Kühlkreislaufes 6 abzweigt. Ferner weist der Kältespeicher 10 eine Ausgangsleitung 16 auf, welche an einem Mündungspunkt 18 in die Vorlaufleitung 14 mündet. Dabei ist der Mündungspunkt 18 in der Vorlaufleitung 14 stromabwärts des Abzweigpunktes 20 gelegen, an welchem die Eingangsleitung 12 von der Vorlaufleitung 14 abzweigt.

In der Ausgangsleitung 16 des Kältespeichers 10 ist eine zweite Förderpumpe in Form eines Umwälzpumpenaggregates 22 angeordnet. Das Umwälzpumpenaggregat 22 fördert das Kühlmedium durch den Kältespeicher 10, um diesen zu kühlen oder diesem Wärme zuzuführen, um den Verbraucher 4 zu kühlen, wie weiter unten beschrieben wird. Das Umwälzpumpenaggregat 22 könnte anstatt in der Ausgangsleitung 16 auch in der Eingangsleitung 12 des Kältespeichers 10 angeordnet sein.

In der Eingangsleitung 12 zu dem Kältespeicher 10 ist eine Umschalteinrichtung in Form eines Umschaltventils 24 angeordnet. Das Umschaltventil ist als 3/2-Wegeventil ausgebildet und in diesem Ausführungsbeispiel durch einen Motor M motorisch verstellbar, d. h. zwischen den zwei Strömungswegen umschaltbar. Einer der drei Anschlüsse des Umschaltventils 24 ist mit dem Kältespeicher 10 verbunden, ein zweiter Anschluss ist mit dem Abzweigpunkt 20, d. h. der Vorlaufleitung 14 verbunden. Ein dritter Anschluss ist über eine Strömungsverbindung 26 mit einer Rücklaufleitung 28 des Kühlkreislaufes 6 verbunden. Dabei zweigt die Strömungsverbindung 26 stromaufwärts des Umwälzpumpenaggregates 8 von der Rücklaufleitung 28 ab.

Das Umschaltventil 24 kann dazu genutzt werden, das gezeigte Kühlsystem zwischen zwei möglichen Betriebszuständen umzuschalten.

Ein erster Betriebszustand dient der Kühlung des Verbrauchers 4. In diesem Betriebszustand ist der Kältespeicher zu dem Kühlaggregat 2 parallel geschaltet. Dies geschieht dadurch, dass das Umschaltventil 24 so geschaltet wird, dass der dem Kältespeicher 10 zugewandte Anschluss mit der Strömungsverbindung 26 verbunden wird und gleichzeitig der Strömungsweg zu dem Abzweigpunkt 20 geschlossen wird. In diesem Betriebszustand fördert das Umwälzpumpenaggregat 8 Kühlmedium im Kühlkreislauf 6 über die Rücklaufleitung 28 und das Kühlaggregat 2 sowie die Vorlaufleitung 14 durch den Verbraucher 4, um diesen zu kühlen. Durch Abschalten des Umwälzpumpenaggregates 8 kann dieser Kühlkreislauf unterbrochen werden. Über die zweite Förderpumpe in Form des Umwälzpumpenaggregates 22 wird ein zweiter parallel verlaufender Kühlkreislauf geschaffen, in welchem über die Rücklaufleitung 28, die Strömungsverbindung 26, durch den Kältespeicher 10 und die Ausgangsleitung 16 Kühlmedium ebenfalls im Kreislauf durch den Verbraucher 4 geführt wird. So kann Wärme aus dem Verbraucher in den Kältespeicher 10 abgeführt werden. In dem Kältespeicher 10 erhöht sich dabei die Temperatur des dort gespeicherten Mediums. Im Falle eines Eisspeichers kann das Eis beispielsweise auftauen. Es ist dann möglich, nur das Umwälzpumpenaggregat 22 zu betreiben und das Umwälzpumpenaggregat 8 abzuschalten, sodass die Kühlung allein durch den Kältespeicher 10 bewirkt wird. Sollte die Kühlleistung nicht ausreichen oder der Kältespeicher 10 nicht mehr ausreichend kalt sein, kann zusätzlich das Umwälzpumpenaggregat 8 in Betrieb genommen werden und gleichzeitig eine parallele Kühlung über das Kühlaggregat 2 erfolgen. Sollte der Kältespeicher 10 nicht mehr ausreichend kalt sein, kann das Umwälzpumpenaggregat 22 abgeschaltet werden und die Kühlung so alleine durch Betrieb des Umwälzpumpenaggregates 8 über das Kühlaggregat 2 erfolgen.

Zwischen dem Abzweigpunkt 20 und dem Mündungspunkt 18 ist in der Vorlaufleitung 14 ein Rückschlagventil 30 angeordnet, welches verhindert, dass bei dieser Parallelschaltung Kühlmedium von dem Mündungspunkt 18 direkt zurück in den Abzweigpunkt 20 strömt. In diesem Ausführungsbeispiel ist auch in der Strömungsverbindung 26 ein Rückschlagventil 32 angeordnet, welches sicherstellt, dass durch die Strömungsverbindung 26 Kühlmedium nur in der Richtung von der Rücklaufleitung 28 zu dem Umschaltventil 24 strömen kann.

Die Steuerung des Umschaltventiles 24 über dessen Motor M erfolgt über eine Steuereinrichtung 34. Zusätzlich kann die Steuereinrichtung 34 die Umwälzpumpenaggregat 8 und 22 steuern, d. h. insbesondere einund ausschalten. Weiter bevorzugt bewirkt die Steuereinrichtung 34 darüber hinaus eine Drehzahlregelung des Umwälzpumpenaggregates 8 und/oder des Umwälzpumpenaggregates 22, um den Durchfluss durch die Kühlkreisläufe zu regeln und insbesondere an den Kältebedarf des Verbrauchers 4 anpassen zu können. In den Figuren sind die Signal- bzw. Steuerverbindungen durch gestrichelte Linien dargestellt. Diese können durch Leitungen, aber auch drahtlos realisiert werden. Im vorliegenden Beispiel ist die Pumpensteuerung bzw. -regelung mit in die Steuereinrichtung 34, welche das Umschaltventil 24 ansteuert, integriert. Es ist jedoch zu verstehen, dass die Pumpenregelung bzw. -steuerung auch über eine separate Steuereinrichtung erfolgen könnte.

Zum Kühlen des Kältespeichers 10 wird das gezeigte Kühlsystem über die Steuereinrichtung 34 in einen zweiten Betriebszustand gebracht. In diesem zweiten Betriebszustand sind der Kältespeicher 10, der Verbraucher 4 und das Kühlaggregat 2 in Reihe bzw. in Serie geschaltet. Dies erfolgt durch Umschalten des Umschaltventils 24 über den Motor M, welcher dazu von der Steuereinrichtung 34 angesteuert wird. Bei dem Motor M kann es sich um einen Elektromotor, insbesondere einen Schrittmotor oder auch um einen anderen elektrischen Antrieb handeln. Es ist jedoch zu verstehen, dass hier auch andere geeignete Antriebe Verwendung finden könnten. In dem zweiten Betriebszustand, d. h. einer zweiten Schaltstellung des Umschaltventiles 24 sind dessen Anschluss, welcher dem Abzweigpunkt 20 zugewandt ist und dessen Anschluss, welcher dem Kältespeicher 10 zugewandt ist, miteinander verbunden. Gleichzeitig ist der Anschluss, welcher der Strömungsverbindung 26 zugewandt ist, verschlossen. Bei Betrieb des Umwälzpumpenaggregates 22 wird mit dieser Schaltstellung erreicht, dass zumindest ein Teilstrom in dem Kühlkreislauf 6 aus dem Vorlauf 14 über den Abzweigpunkt 20 und das Umschaltventil 24 durch den Kältespeicher 10 geleitet wird. Über die Ausgangsleitung 16 verläuft die Strömung dann wieder in die Vorlaufleitung 14, von dort durch den Verbraucher 4 und dann über die Rücklaufleitung 28 und das Umwälzpumpenaggregat 8 zurück zu dem Kühlaggregat 2. In dieser Schaltstellung wird somit das in dem Kühlaggregat 2 abgekühlte Kühlmedium direkt dem Kältespeicher 10 zugeführt, sodass dieser im Wesentlichen mit der Ausgangstemperatur des Kühlaggregates 2, welche die niedrigste Temperatur im Kühlkreislauf 6 ist, gekühlt werden kann. Somit wird eine optimale Kühlleistung zum Abkühlen des Kältespeichers 10 erreicht.

Abgekühlt wird der Kältespeicher 10 vorzugsweise dann, wenn günstige oder überschüssige Energie zur Verfügung steht, welche aktuell zur Kühlung des Verbrauchers 4 nicht benötig wird. Die dabei in dem Kältespeicher 10 gespeicherte Kälte kann dann später zur Kühlung des Verbrauchers 4 genutzt werden, wenn dieser beispielsweise eine besonders hohe Kühlleistung benötigt, weniger Energie zum Betrieb des Kühlaggregates 2 zur Verfügung steht und/oder die Energiepreise höher sind. Die Informationen über zur Verfügung stehende Energie und Energiepreise können der Steuereinrichtung 34 beispielsweise über ein Smart-grid zugeführt werden.

Im gezeigten Beispiel ist der Verbraucher 4 ferner mit einer Mischeinrichtung 36 versehen. Diese weist ein Mischventil 38 auf, welches über einen Motor M elektromotorisch verstellbar ist. Im gezeigten Beispiel erfolgt auch die Ansteuerung des Mischventils über die Steuereinrichtung 34. Alternativ ist es jedoch möglich, dass das Mischventil 38 von einer separaten Mischersteuerung angesteuert wird. Das Mischventil ist als 3/3-Wegeventil ausgebildet, wobei es nicht nur ein Umschalten zwischen den zwei Strömungswegen ermöglicht, sondern zur Änderung des Verhältnisses, d. h. des Durchgangsverhältnisses zwischen den beiden Strömungswegen in der Lage ist. Von den drei Anschlüssen des Mischventiles ist einer mit der Vorlaufleitung 14, ein zweiter mit dem Eingang 40 des Verbrauchers 4 und ein dritter mit einer Mischleitung 42 verbunden, welche in der Rücklaufleitung 28 abzweigt und somit mit dem Ausgang des Verbrauchers 4 in Verbindung steht. Über das Mischventil 38 kann der Kühlmediumströmung durch die Vorlaufleitung 14 zu dem Eingang 40 des Verbrauchers 4 Kühlmedium aus dem Rücklauf von dem Verbraucher 4, d. h. aus der Rücklaufleitung 28 über die Mischleitung 42 in veränderbarer Menge zugemischt werden. So kann die Temperatur des Kühlmediums am Eingang 40 des Verbrauchers 4 eingestellt bzw. geregelt werden. Durch Zumischen von Kühlmedium aus dem wärmeren Rücklauf wird die Temperatur im Vorlauf erhöht.

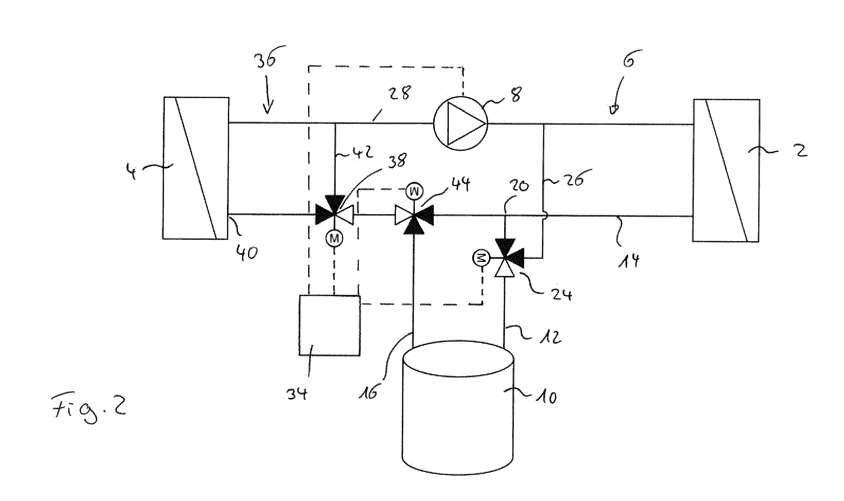

Das zweite Ausführungsbeispiel in Fig. 2 unterscheidet sich von dem Ausführungsbeispiel in Fig. 1 dadurch, dass auf die zweite Förderpumpe in Form des Umwälzpumpenaggregates 22 verzichtet ist. Stattdessen ist in dem Mündungspunkt 18 ein Regulierventil 44 angeordnet. D. h. in diesem zweiten Ausführungsbeispiel wird der Durchfluss durch den Kältespeicher 10 nicht über eine separate Pumpe geregelt, sondern über das Regulierventil 44. Das Regulierventil ist wie das Mischventil 38 als 3/3-Wegeventil ausgebildet. Ein erster Anschluss des Regulierventils 44 ist mit dem dem Kühlaggregat 2 zugewandten Abschnitt der Vorlaufleitung 14 verbunden. Ein zweiter Anschluss ist dem Verbraucher zugewandt und ein dritter Anschluss ist mit der Ausgangsleitung 16 des Kältespeichers 10 verbunden. Über einen Motor M, welcher in diesem Beispiel von der Steuereinrichtung 34 angesteuert wird, lässt sich der Strömungsweg mittels des Regulierventils 44 durch Verändern dessen Schaltstellung verändern. So kann der Strömungsweg in einer ersten Endstellung aus der Vorlaufleitung 14 direkt zu dem Verbraucher 4, in diesem Fall bevorzugt über das Mischventil 38, erfolgen. In dieser Schaltstellung ist der Strömungsweg durch den Kältespeicher 10 unterbrochen. In einer zweiten Schalt- bzw. Endstellung hingegen ist der Strömungsweg aus der Vorlaufleitung 14 durch das Regulierventil 44 unterbrochen, sodass der Strömungsweg lediglich über den Abzweigpunkt 20 und durch den Kältespeicher 10 und dann durch das Regulierventil 44 zu dem Verbraucher 4 bzw. dem vorgeschalteten Mischventil 38 erfolgt. Bevorzugt ist das Regulierventil 44 so ausgebildet, dass es Zwischenstellungen zwischen diesen beiden Endstellungen zulässt, sodass die aus dem Kühlaggregat 2 in die Vorlaufleitung 14 austretende Kühlmediumströmung in zwei Teilströme aufgeteilt werden kann, von welchen einer durch den Kältespeicher 10 und der andere direkt über das Regulierventil 44 zu dem Verbraucher 4 erfolgt. Durch Veränderung der Zwischenstellungen kann das Verhältnis dieser Teilströme reguliert werden und damit der Durchfluss durch den Kältespeicher geregelt bzw. gesteuert werden.

Auch in dem Ausführungsbeispiel gemäß Fig. 2 funktioniert die Mischeinrichtung 36 zur Temperaturregelung der Kühlmediumtemperatur am Eingang 40 des Verbrauchers 4 wie anhand von Fig. 1 beschrieben. Auch ist bei dem Ausführungsbeispiel gemäß Fig. 2 das Umschalten zwischen den zwei anhand von Fig. 1 beschriebenen Betriebszuständen mithilfe des Umschaltventils 24 möglich. In einem ersten Betriebszustand sind der Kältespeicher 10 und das Kühlaggregat 2 wie oben beschrieben parallel geschaltet. In diesem Zustand verfolgt eine Teilströmung der von dem Umwälzpumpenaggregat 8 erzeugten Kühlmediumströmung über die Strömungsverbindung 26 durch den Kältespeicher 10, während eine zweite Teilströmung durch das Kühlaggregat 2 verläuft. Über das Regulierventil 44 kann dabei wie oben beschrieben das Verhältnis dieser Strömungen zueinander verändert werden, sodass eine Kühlung des Verbrauchers 4 allein durch den Kältespeicher 10, allein durch das Kühlaggregat 2 oder aber durch das Kühlaggregat 2 mit dem Kältespeicher 10 gemeinsam erfolgen kann.

In dem zweiten Betriebszustand wird auch hier der Strömungsweg durch die Strömungsverbindung 26 unterbrochen und der Strömungsweg von dem Abzweigpunkt 20 zu dem Kältespeicher 10 geöffnet. So wird ein Kühlmediumstrom direkt von dem Kühlaggregat 2 durch den Kältespeicher 10 zu dessen Kühlung gelenkt. In diesem Betriebszustand kann der Strömungsweg von dem Kühlaggregat 2 zu dem Verbraucher 4 durch entsprechende Schaltung des Regulierventiles 44 unterbrochen werden, sodass der Kühlmediumkreislauf vollständig durch den Kältespeicher 10 und anschließend von diesem durch den Verbraucher 4 zurück zu dem Kühlaggregat 2 erfolgt. Bei dem Ausführungsbeispiel gemäß Fig. 2 werden alle Kühlmediumströme allein durch das eine Umwälzpumpenaggregat 8 erzeugt.

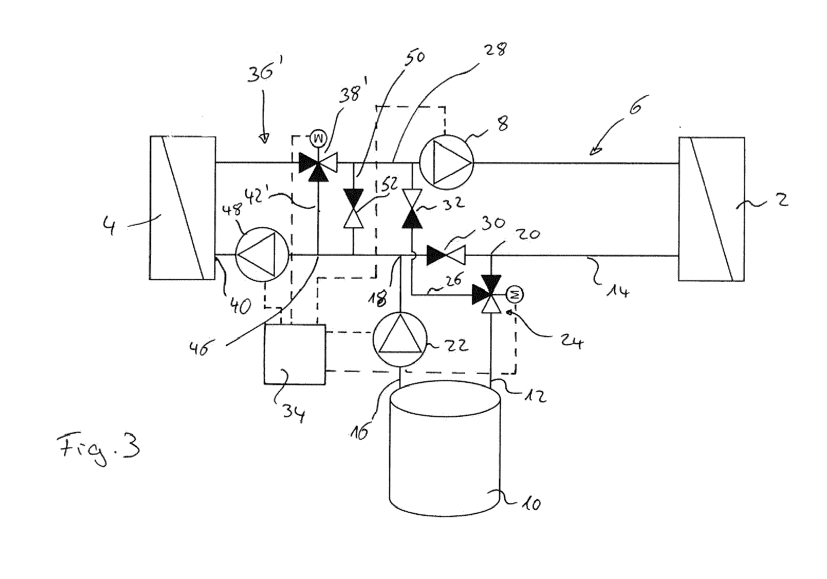

Ein drittes Ausführungsbeispiel gemäß Fig. 3 unterscheidet sich von dem ersten Ausführungsbeispiel gemäß Fig. 1 in dem Aufbau der Mischeinrichtung 36'. Die Mischeinrichtung 36' weist ein Mischventil 38' auf, welches im Unterschied zu dem Ausführungsbeispiel gemäß Fig. 1 jedoch nicht im Vorlauf bzw. am Eingang des Verbrauchers 4, sondern an dessen Ausgang bzw. im Rücklauf gelegen ist. Das Mischventil 38' ist ein 3/3-Wegeventil, wobei das Verhältnis der zwei möglichen Strömungswege zueinander veränderbar ist, d. h. es ist nicht lediglich ein Umschalten, sondern auch ein Mischen zwischen beiden Strömungswegen möglich. Von den drei Anschlüssen des Mischventiles 38' ist ein erster mit dem Ausgang des Verbrauchers 4 verbunden. Ein zweiter Anschluss ist mit der weiteren Rücklaufleitung 28 verbunden und steht somit mit dem Umwälzpumpenaggregat 8 in Verbindung. Der dritte Anschluss ist mit einer Mischleitung 42' verbunden, welcher an einem Mündungspunkt 46 in die Vorlaufleitung 14 mündet. Dabei liegt der Mündungspunkt 46 stromabwärts des Mündungspunktes 18, an welchem die Ausgangsleitung 16 des Kältespeichers 10 in die Vorlaufleitung 14 mündet. Die Mischeinrichtung 36 weist darüber hinaus ein Umwälzpumpenaggregat 48 auf, über welches der Durchfluss bzw. Volumenstrom des Kühlmediums durch den Verbraucher 4 eingestellt bzw. geregelt wird. Dazu ist das Umwälzpumpenaggregat 48 vorzugsweise in seiner Drehzahl regulier- bzw. regelbar. Im gezeigten Beispiel erfolgt die Ansteuerung über die Steuereinrichtung 34, welche auch das Mischventil 38' ansteuert. Wie anhand von Fig. 1 beschrieben dient die Steuereinrichtung 34 auch dazu, zwischen den zwei vorangehend beschriebenen Betriebszuständen des Kühlsystems umzuschalten. Die Mischeinrichtung 36 könnte im Unterschied zu dem gezeigten Beispiel auch eine separate Mischersteuerung aufweisen, welche das Umwälzpumpenaggregat 38 und das Mischventil 38' ansteuert.

Über das Mischventil 38' kann ähnlich dem Mischventil 38 in Figuren 1 und 2 dem Strom von Kühlmedium aus dem Vorlauf 14, welcher durch das Umwälzpumpenaggregat 48 erzeugt wird, ein Anteil von wärmeren Kühlmedium aus dem Rücklauf des Verbrauchers 4 zugemischt werden, um die Temperatur am Eingang 40 des Verbrauchers 4 gegenüber der Vorlauftemperatur in der Vorlaufleitung 14 zu erhöhen. So ist eine Temperatureinstellung bzw. -regelung der Kühlmediumtemperatur am Eingang 40 des Verbrauchers 4 möglich. Die in Fig. 3 gezeigte Ausführungsform hat den Vorteil, dass die Kühlmediumströme durch den Verbraucher 4, das Kühlaggregat 2 und den Kältespeicher 10 hydraulisch völlig unabhängig voneinander eingestellt bzw. geregelt werden können, da für diese drei Teilbereiche drei separate Pumpen, nämlich das Umwälzpumpenaggregat 8, das Umwälzpumpenaggregat 22 und das Umwälzpumpenaggregat 48 vorgesehen sind. Darüber hinaus ist es durch Abschalten des Umwälzpumpenaggregates 48 auch möglich, den Kühlmediumstrom durch den Verbraucher 4 vollständig abzuschalten. Dies kann vorteilhaft sein, um ein Einfrieren der Leitungen im Bereich des Verbrauchers 4 zu verhindern, wenn im Bereich des Verbrauchers 4 kein Kühlbedarf besteht, d. h. keine ausreichende abzuführende Wärmemenge vorhanden ist. Um in diesem Fall die Strömung durch das Umwälzpumpenaggregat 8 und gegebenenfalls das Umwälzpumpenaggregat 22 aufrechterhalten zu können, ist in diesem Ausführungsbeispiel ein Bypass 50 vorgesehen, welcher die Vorlaufleitung 14 mit der Rücklaufleitung 28 parallel zu dem Verbraucher 4 verbindet. Dabei zweigt der Bypass 50 von der Vorlaufleitung 14 stromabwärts des Mündungspunktes 18 und stromaufwärts des Mündungspunktes 46 von der Vorlaufleitung 14 ab und mündet in die Rücklaufleitung 28 stromaufwärts des Umwälzpumpenaggregates 8 und der Einmündung der Strömungsverbindung 26. Dies ist in diesem Beispiel stromabwärts des Mischventils 38'. In dem Bypass 50 ist ein Rückschlagventil 52 angeordnet, welches eine Strömung nur in der Richtung von der Vorlaufleitung 14 zu der Rücklaufleitung 28 zulässt.

Die beiden Betriebszustände zum Kühlen des Kältespeichers 10 und zum Kühlen des Verbrauchers 4 funktionieren bei dem Ausführungsbeispiel gemäß Fig. 3 genauso, wie es anhand von Fig. 1 beschrieben wurde. Insofern wird auf diese Beschreibung verwiesen.

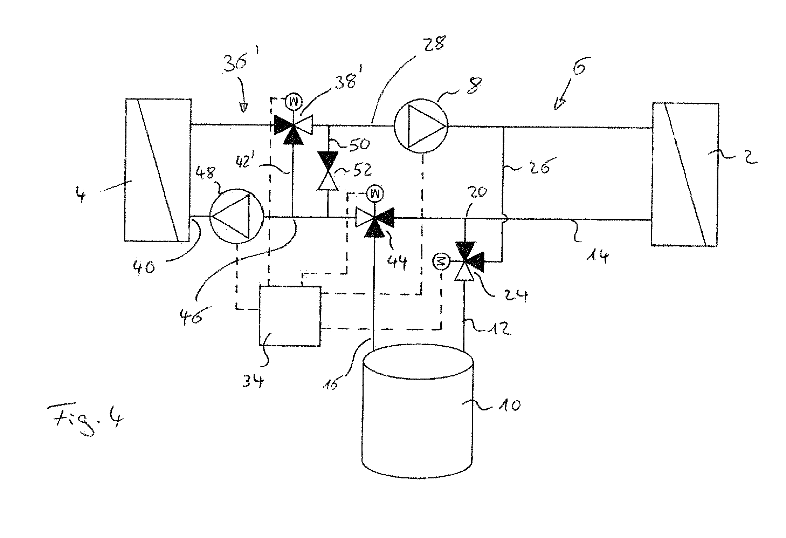

Das Ausführungsbeispiel gemäß Fig. 4 stellt eine Kombination der Ausführungsformen gemäß der Figuren 2 und 3 dar, d. h. es ist die in Fig. 3 beschriebene Mischeinrichtung 36' mit dem Mischventil 38' und dem Umwälzpumpenaggregat 48 vorgesehen. Gleichzeitig ist wie bei dem Ausführungsbeispiel gemäß Fig. 2 anstelle des Umwälzpumpenaggregates 22 ein Regulierventil 44 vorgesehen. Insofern wird hinsichtlich der Funktion der Mischeinrichtung 36 auf die Erläuterungen zu Fig. 3 und hinsichtlich der Funktion des Regulierventils 44 auf die entsprechenden Ausführungen zu Fig. 2 verwiesen. In dem hier gezeigten Beispiel ist eine zentrale Steuereinrichtung 34 vorgesehen. Es ist jedoch zu verstehen, dass hier auch mehrere getrennte Steuereinrichtungen, insbesondere eine separate Mischersteuerung, welche das Mischventil 38' und das Umwälzpumpenaggregat 48 steuert, vorgesehen sein können.

Insgesamt ist es bei allen vier Ausführungsbeispielen möglich, statt einer zentralen Steuereinrichtung 34 mehrere separate Steuereinrichtungen zur Steuerung bzw. -regelung einzelner Komponenten einzusetzen. Gegebenenfalls könnten diese mehreren Steuereinrichtungen miteinander kommunizieren bzw. verknüpft sein. Darüber hinaus ist zu verstehen, dass alle beschriebenen Pumpen anstelle im Vorlauf auch im Rücklauf oder umgekehrt angeordnet sein können. Ferner können alle Mischventile entweder zur Teilung einer Strömung in zwei Strömungen oder zur Zusammenführung zweier Strömungen in eine Strömung angeordnet sein. Diese Varianten werden alle als Äquivalent angesehen. Darüber hinaus können anstatt der gezeigten 3/3- oder 3/2-Wegeventile auch Anordnungen mehrerer einzelner Ventile, welche in Kombination die gewünschte Funktion bereitstellen, realisiert werden. Darüber hinaus sind die beschriebenen Rückschlagventile nicht zwingend erforderlich und könnten gegebenenfalls entfallen. Darüber hinaus könnten zusätzliche Rückschlagventile in einzelnen Strömungswegen angeordnet sein, um einen unerwünschten Rückfluss der Strömung zu verhindern. Darüber hinaus können die verschiedenen anhand der Figuren 1 bis 4 gezeigten Varianten auch unterschiedlich miteinander kombiniert werden. Allen Ausführungsbeispielen gemeinsam ist jedoch, dass das Kühlsystem so ausgebildet ist, dass es in zwei verschiedene Betriebszustände geschaltet werden kann, wobei in einem ersten Betriebszustand der zumindest eine Kältespeicher parallel zu dem Kühlaggregat geschaltet ist, während er in einem zweiten Betriebszustand zu dem Kühlaggregat in Reihe geschaltet ist.

Darüber hinaus ist zu verstehen, dass auch mehrere Kältespeicher 10 vorhanden sein könnten, welche z. B. zueinander parallel geschaltet sind. Ferner könnten auch mehrere Kühlaggregate 2 und/oder mehrere Verbraucher 4 vorgesehen sein. Auch die beschriebenen Umwälzpumpenaggregate könnten als Anordnungen von Umwälzpumpenaggregaten, welche aus mehreren parallel oder in Reihe geschaltet wirkenden Pumpenaggregaten zusammengesetzt sind, ausgebildet sein.

### Bezugszeichen

- 2: Kühlaggregat
- 4: Verbraucher
- 6: Kühlkreislauf
- 8: Umwälzpumpenaggregat
- 10: Kältespeicher
- 12: Eingangsleitung
- 14: Vorlaufleitung
- 16: Ausgangsleitung
- 18: Mündungspunkt
- 20: Abzweigpunkt
- 22: Umwälzpumpenaggregat
- 24: Umschaltventil
- 26: Strömungsverbindung
- 28: Rücklaufleitung
- 30, 32: Rückschlagventile
- 34: Steuereinrichtung
- 36, 36': Mischeinrichtung
- 38, 38': Mischventil
- 40: Eingang
- 42, 42': Mischleitung
- 44: Regulierventil
- 46: Mündungspunkt
- 48: Umwälzpumpenaggregat
- 50: Bypass
- 52: Rückschlagventil
- M: Motor

## Patentansprüche

1. Verfahren zum Betrieb eines Kühlsystems, welches zumindest ein Kühlaggregat (2), zumindest einen Kältespeicher (10) sowie zumindest einen zu kühlenden Verbraucher (4) aufweist, durch welche ein Kühlmedium zirkuliert,
**dadurch gekennzeichnet, dass**
in zumindest einem ersten Betriebszustand das Kühlaggregat (2) und der Kältespeicher (10) in einer Parallelschaltung mit dem Verbraucher (4) verbunden sind und
in zumindest einem zweiten Betriebszustand das Kühlaggregat (2) und der Kältespeicher (10) in einer Serienschaltung miteinander verbunden sind.

2. Verfahren nach Anspruch 1, **dadurch gekennzeichnet, dass** in dem zweiten Betriebszustand das Kühlaggregat (2), der Kältespeicher (10) und der Verbraucher (4) in einer Serienschaltung miteinander verbunden sind.

3. Verfahren nach Anspruch 1 oder 2, **dadurch gekennzeichnet, dass** in dem ersten Betriebszustand der Kältespeicher (10) zur Kühlung des zumindest einen Verbrauchers (4) genutzt wird.

4. Verfahren nach einem der vorangehenden Ansprüche, **dadurch gekennzeichnet, dass** in dem zweiten Betriebszustand der Kältespeicher (10) von dem Kühlaggregat (2) gekühlt wird.

5. Verfahren nach einem der vorangehenden Ansprüche, **dadurch gekennzeichnet, dass** in dem zweiten Betriebszustand das Kühlaggregat (2), der Kältespeicher (10) und der Verbraucher (4) derart miteinander verbunden sind, dass der Kältespeicher (10) stromabwärts des Kühlaggregates (2) und stromaufwärts des Verbrauchers (4) gelegen ist.

6. Kühlsystem mit zumindest einem Kühlaggregat (2), zumindest einem Kältespeicher (10) und zumindest einem zu kühlenden Verbraucher (4), welche über Leitungen, durch welche ein Kühlmedium zirkuliert, miteinander verbunden sind,
**gekennzeichnet durch** eine Umschalteinrichtung (24), welche derart ausgebildet ist, dass **durch** Umschalten der Umschalteinrichtung der Kältespeicher (10) wahlweise in einer Parallelschaltung oder in einer Serienschaltung mit dem Kühlaggregat (2) verbindbar ist.

7. Kühlsystem nach Anspruch 6, **dadurch gekennzeichnet, dass** in einer Verbindung zu dem zumindest einen Kältespeicher (10) als Umschalteinrichtung ein Umschaltventil (24) angeordnet ist, welches einen ersten und einen zweiten Strömungsweg aufweist, welche wahlweise mit dem Kältespeicher (10) in Verbindung bringbar sind, wobei bevorzugt der erste Strömungsweg des Umschaltventils (24) mit einem Ausgang des Kühlaggregates (10) verbunden ist und bevorzugt der zweite Strömungsweg des Umschaltventils (24) mit einem Ausgang des Verbrauchers (4) verbunden ist.

8. Kühlsystem nach Anspruch 7, **dadurch gekennzeichnet, dass** eine Ausgangsleitung (16) des Kältespeichers (10) mit einem Eingang (40) des Verbrauchers (4) verbunden ist und vorzugsweise in eine Vorlaufleitung (14) mündet, welche den Ausgang des Kühlaggregates (2) mit dem Eingang (40) des Verbrauchers (4) verbindet.

9. Kühlsystem nach Anspruch 8, **dadurch gekennzeichnet, dass** die Ausgangleitung (16) des Kältespeichers (10) an einem Mündungspunkt (18) in die Vorlaufleitung (14) mündet und stromaufwärts des Mündungspunktes (18) in der Vorlaufleitung (14) ein Rückschlagventil (30) angeordnet ist.

10. Kühlsystem nach einem der Ansprüche 6 bis 9, **dadurch gekennzeichnet, dass** in einer der das Kühlaggregat (2) mit dem Verbraucher (4) verbindenden Leitungen, vorzugsweise in einer einen Ausgang des Verbrauchers (4) mit einem Eingang des Kühlaggregates (2) verbindenden Rücklaufleitung (28), zumindest eine erste Förderpumpe (8) angeordnet ist

11. Kühlsystem nach einem der Ansprüche 6 bis 10, **dadurch gekennzeichnet, dass** in einem Strömungsweg durch den zumindest einen Kältespeicher (10) zumindest eine zweite Förderpumpe (22) und/oder ein Durchflussregulierventil (44) angeordnet ist.

12. Kühlsystem nach einem der Ansprüche 6 bis 11, **dadurch gekennzeichnet, dass** an dem Verbraucher (4) zumindest eine Mischeinrichtung (36; 36') angeordnet ist, welche eine Anpassung der Temperatur und/oder des Durchflusses des durch den Verbraucher (4) strömenden Kühlmediums ermöglicht.

13. Kühlsystem nach Anspruch 12, **dadurch gekennzeichnet, dass** die Mischeinrichtung (36; 36') ein Mischventil (38; 38') aufweist, über welches die Menge von Kühlmedium, welches dem Eingang (40) des Verbrauchers (4) aus der Vorlaufleitung (14) zugeführt wird, einstellbar ist, wobei das Mischventil (38; 38') vorzugsweise ein vollständiges Verschließen eines Strömungsweges von der Vorlaufleitung (14) zu dem Eingang (40) des Verbrauchers (4) ermöglicht.

14. Kühlsystem nach einem der Ansprüche 6 bis 13, **gekennzeichnet durch** eine Steuereinrichtung (34), welche mit der Umschalteinrichtung (24) zu deren Betätigung verbunden und derart ausgestaltet ist, dass die Umschalteinrichtung (24) von der Steuereinrichtung (34) zum Kühlen des Kältespeichers (10) derart betätigt wird, dass der Kältespeicher in einer Serienschaltung mit dem Kühlaggregat (2) verbunden ist.

15. Kühlsystem nach Anspruch 14, **dadurch gekennzeichnet, dass** die Steuereinrichtung (34) derart ausgestaltet ist, dass die Umschalteinrichtung (24) von der Steuereinrichtung (34) zum Kühlen des Verbrauchers (4) derart betätigt wird, dass der Kältespeicher (10) in einer Parallelschaltung zu dem Kühlaggregat (2) mit dem Verbraucher (4) verbunden ist.

16. Kühlsystem nach Anspruch 11 und Anspruch 14 oder 15, **dadurch gekennzeichnet, dass** die zweite Förderpumpe (22) von der Steuereinrichtung (34) ein- und ausschaltbar und vorzugsweise in ihrer Drehzahl einstellbar ist.
